# EUROPÄISCHE PATENTSCHRIFT

(11) **EP 2 263 773 B1**
(45) Veröffentlichungstag und Bekanntmachung des Hinweises auf die Patenterteilung: **13.03.2013**
(21) Anmeldenummer: 10163057.2
(22) Anmeldetag: 18.05.2010
(51) Int. Cl.: B01D 35/153

(54) **Filtereinrichtung**
Filter device
Dispositif de filtre

(30) Priorität: 28.05.2009 DE 102009023027
(43) Veröffentlichungstag der Anmeldung: 22.12.2010
(73) Patentinhaber: Mahle International GmbH, 70376 Stuttgart (DE)
(72) Erfinder: Kiemlen, Ralf, 72760, Reutlingen (DE); Schützle, Roland, 70469 Stuttgart (DE); Stange, Frank, 73207, Plochingen (DE)
(74) Vertreter: BRP Renaud & Partner

(56) Entgegenhaltungen:
- WO-A1-02/36940
- WO-A1-03/078025
- DE-A1- 19 702 612
- DE-U1-202006 007 194
- US-B1- 6 572 768

## Beschreibung

Die vorliegende Erfindung betrifft eine Filtereinrichtung zum Filtern einer Flüssigkeit einer Brennkraftmaschine, insbesondere in einem Kraftfahrzeug, mit den Merkmalen des Oberbegriffs des Anspruchs 1.

Aus der EP 1 229 985 B1 ist eine derartige Filtereinrichtung bekannt, bei der es sich bevorzugt um ein Ölfilter zum Reinigen von Schmieröl, insbesondere für Verbrennungsmotoren von Kraftfahrzeugen, handelt. Die bekannte Filtereinrichtung weist ein Filtergehäuse zur Aufnahme eines Filterelements auf, wobei das Filtergehäuse einen rohseitigen Zulauf und einen reinseitigen Ablauf aufweist. Das Filterelement trennt im eingesetzten Zustand einen mit dem Zulauf kommunizierenden Rohraum von einem mit dem Ablauf kommunizierenden Reinraum. Ferner weist das Filtergehäuse der bekannten Filtereinrichtung einen mit dem Rohraum kommunizierenden Leerlauf auf, der für einen am Filterelement ausgebildeten, axial und exzentrisch abstehenden Zapfen eine Zapfenaufnahme bildet, in die der Zapfen im eingesetzten Zustand des Filterelements eingesteckt ist. Der Zapfen verschließt somit den Leerlauf, wenn das Filterelement ordnungsgemäß in das Filtergehäuse eingesetzt ist.

Aus der WO 98/32517 ist ein Ablaufventil, insbesondere für einen Ölfilter, bekannt, bei dem ein Ventilkörper zum Verschließen einer Ablauföffnung federbelastet gegen einen Ventilsitz an der Ablauföffnung eines Flüssigkeitsbehälters gedrückt wird. Der Ventilkörper weist mindestens einen Widerhaken auf, der während der Montage des Ablaufventils durch die Ablauföffnung hindurch gegen den Druck einer Feder einschnappbar ist und damit einen durch die Form des Widerhakens vorgegebenen Abstand des Ventilkörpers zum Ventilsitz im geöffneten Zustand fixiert. Hierdurch soll insbesondere eine einfache Montage des Ventilkörpers erreicht werden.

Aus der WO 01/12294 A1 und aus der US 6 572 768 ist eine weitere Filtereinrichtung mit einem federbelasteten Ablaufventil bekannt, welches bei eingesetztem Filterelement geschlossen und bei entferntem Filterelement geöffnet ist.

Die vorliegende Erfindung beschäftigt sich mit dem Problem, für eine Filtereinrichtung der gattungsgemäßen Art, eine verbesserte oder zumindest eine andere Ausführungsform anzugeben, die insbesondere ein Austauschen eines Filterelements einfacher gestaltet und bei welcher weniger Roh- und Reinölvolumen beim Filterelementwechsel im Motor verbleibt.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einer Filtereinrichtung zum Filtern einer Flüssigkeit einer Brennkraftmaschine einen Verbindungskanal vorzusehen, der einerseits in einen Reinraum mündet und andererseits in einen Leerlaufkanal, wobei dieser Leerlaufkanal bei in die Filtereinrichtung eingesetztem Filterelement sowohl zum Rohraum hin als auch zu einem Ölreservoir über den Reinraum hin verschlossen ist, während er bei entferntem Filterelement geöffnet ist und gleichzeitig kommunizierend mit dem Reinraum und dem Rohraum verbunden ist, so dass nach einem Entfernen des Filterelements der Reinraum teilweise und der Rohraum vorzugsweise vollständig über den Leerlaufkanal entleert werden können. Die Filtereinrichtung weist darüber hinaus in bekannter Weise ein Filtergehäuse zur Aufnahme des Filterelements auf, wobei dieses Filterelement im eingesetzten Zustand den bekannten Rohraum von dem bekannten Reinraum trennt. Axial und exzentrisch abstehend ist an dem Filterelement ein Zapfen angeordnet, der im eingesteckten Zustand in eine Zapfenaufnahme im Leerlaufkanal eingesteckt ist. Ebenfalls im Bereich der Zapfenaufnahme ist darüber hinaus erfindungsgemäß eine Ventileinrichtung vorgesehen, die bei eingesetztem Filterelement durch den Zapfen in einen Schließzustand gedrückt wird und den Leerlaufkanal dadurch verschließt. Der bei eingesetztem Filterelement in die Zapfenaufnahme eingedrückte Zapfen weist eine Dichtung auf und ist somit dicht in den Leerlaufkanal einsteckbar. Durch das Betätigen der Ventileinrichtung durch das eingesteckte Filterelement kann weder Rohöl noch Reinöl über den Leerlaufkanal abfließen. Das Ventil und der Zapfen bilden mittels verschiedener Dichtungen die Abtrennung zwischen Roh- und Reinseite einerseits, sowie Roh- und Leerlauf- sowie Rein- und Leerlaufseite andererseits. Der erfindungsgemäß zwischen dem Reinraum und dem Leerlaufkanal vorgesehene Verbindungskanal, mündet in Leerlaufrichtung nach und damit stromab der Dichtung des Zapfens in den Leerlaufkanal, so dass bei entferntem Filterelement sowohl der Rohraum als auch der Reinraum über die geöffnete Ventileinrichtung und insbesondere durch einen hohlen Schiebekolben der Ventileinrichtung hindurch entleert werden können.

Bei eingestecktem Filterelement wird der Verbindungskanal nicht zur Ventileinrichtung hin verschlossen. Der Leerlaufkanal, ist bei eingestecktem Filterelement in beide Richtungen, dass heißt sowohl in Richtung des Rohraums als auch in Richtung des Ölreservoirs bzw. des Reinraumes verschlossen. Und zwar in Richtung des Rohraums sowohl durch die am Zapfen angeordnete Dichtung als auch durch eine Leerlaufdichtstelle der Ventileinrichtung und in Richtung des Ölreservoirs bzw. des Reinraumes durch eine weitere Dichtung der Ventileinrichtung. Mit der erfindungsgemäßen Filtereinrichtung, welche insbesondere bei Nutzfahrzeugen Anwendung findet, ist es möglich, Filterflüssigkeit sowohl aus dem Reinraum als auch aus dem Rohraum nach Entfernen des Filterelements über den Leerlaufkanal abzuführen. Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine erfindungsgemäße Filtereinrichtung,
- Fig. 2: eine Darstellung wie in Fig. 1, jedoch im Bereich einer Ventileinrichtung,
- Fig. 3: eine Darstellung wie in Fig. 2, jedoch mit zusätzlichen Fenstern im Bereich der Ventileinrichtung.

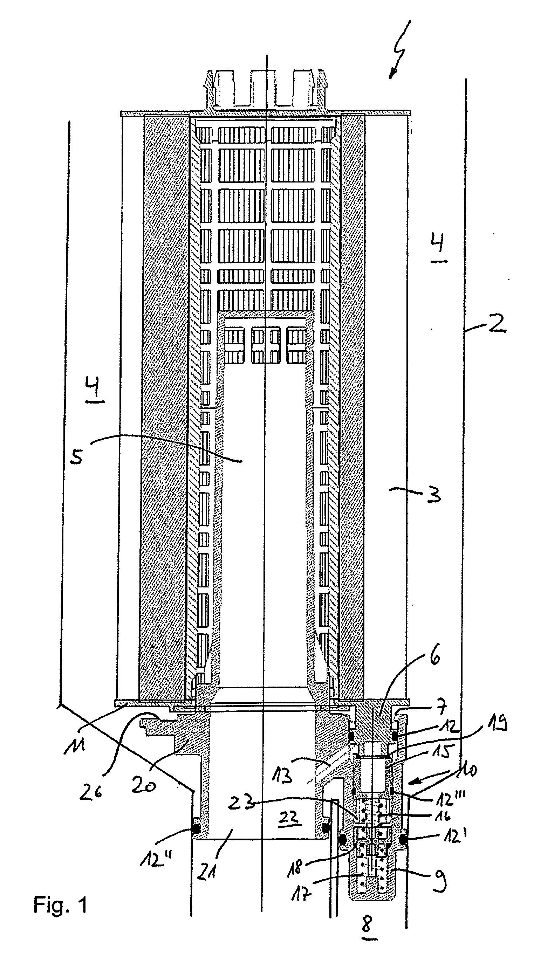

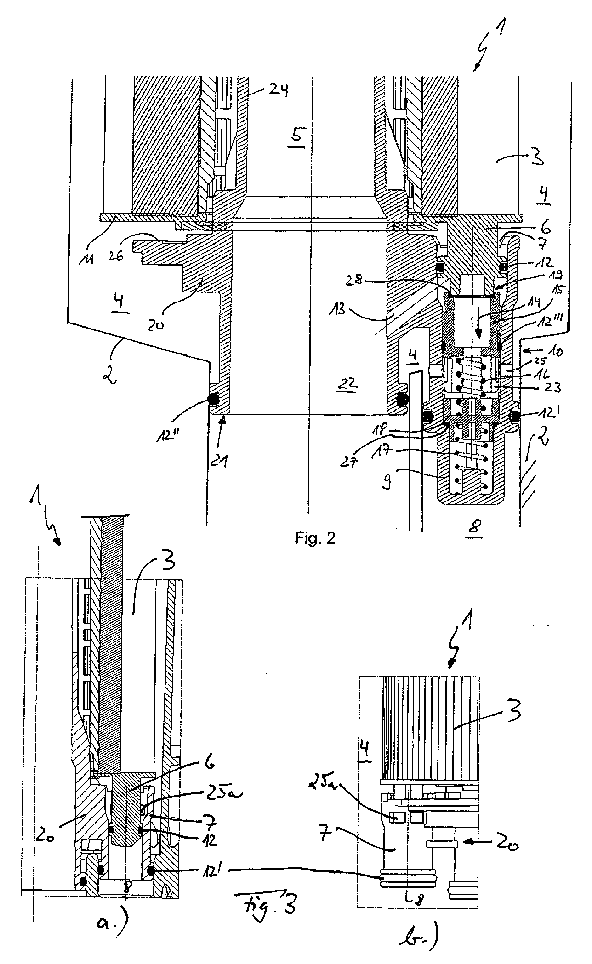

Entsprechend den Fig. 1 und 2, weist eine erfindungsgemäße Filtereinrichtung 1 zum Filtern einer Flüssigkeit einer Brennkraftmaschine, insbesondere in einem Kraftfahrzeug, ein nur schematisch dargestelltes Filtergehäuse 2 mit einem darin angeordneten Filterelement 3, bspw. einem Ringfilterelement, auf. Das Filterelement 3 trennt dabei in bekannter Weise im eingesetzten Zustand einen Rohraum 4 von einem Reinraum 5. Wie der Fig. 1 weiter zu entnehmen ist, weist das Filterelement 3 einen axial und exzentrisch abstehenden Zapfen 6 auf, der im eingesetzten Zustand in eine Zapfenaufnahme 7 in einem Leerlaufkanal 8 eingesteckt ist. Die Zapfenaufnahme 7 kann dabei einen integralen Bestandteil eines insbesondere aus Kunststoff ausgebildeten Einsatzes 9 bilden. Der Einsatz 9 kann als Bestandteil eines in das Filtergehäuse 2 eingesetzten Funktionselements 20 ausgebildet sein. Dieses Funktionselement 20 weist eine im Schnitt gezeigte Rampe 26 auf, die gewährleistet, dass bei einer Montage des Filterelementes 3 der Zapfen 6 in die Zapfenaufnahme 7 geführt wird. Dies ist nach einem Ölwechsel notwendig, wobei das Filterelement 3 ausgewechselt wird und das neue Filterelement 3 mit dem Deckel des Filtergehäuses 2 mitgenommen wird, bis der Zapfen 6 in der Zapfenaufnahme 7 sitzt. Erfindungsgemäß ist nun im Bereich der Zapfenaufnahme 7 eine Ventileinrichtung 10 vorgesehen, die bei vorhandenem Filterelement 3 durch den Zapfen 6 in einen Schließzustand gedrückt ist, den Leerlaufkanal 8 verschließt und dadurch im Betriebszustand der Filtereinrichtung 1 einen Abfluss von Filterflüssigkeit aus dem Rohraum 4 in den Leerlaufkanal 8 unterbindet. Darüber hinaus weist der von einer unteren Endscheibe 11 des Filterelements 3 axial und exzentrisch abstehende Zapfen 6 eine Dichtung 12 auf, über welche der Zapfen 6 dicht in die Zapfenaufnahme 7 einsteckbar ist. Die Dichtung 12 kann dabei bspw. als einfache O-Ring Dichtung ausgebildet und in einer entsprechenden, am Zapfen 6 vorgesehenen, Umfangsnut gehalten sein. Zwischen dem Reinraum 5 und dem Leerlaufkanal 8, welcher sich selbstverständlich im Einsatz 9 und in der Zapfenaufnahme 7 fortsetzt, ist erfindungsgemäß ein Verbindungskanal 13 vorgesehen, der in Leerlaufrichtung 14 nach der Dichtung 12 des Zapfens 6 in den Leerlaufkanal 8 mündet, so dass bei entferntem Filterelement 3 sowohl der Rohraum 4 als auch der Reinraum 5 über die geöffnete Ventileinrichtung 10 entleert werden können, wobei ein Entleeren des Reinraums 5 über den Verbindungskanal 13 erfolgt.

Das Filterelement 3 wird über einen Teil 24 des Funktionselements 20 gestülpt, und wird dadurch auch gestützt. Dieser Teil 24 des Funktionselements 20 bildet einen Abschnitt des Reinraumes 5, der durch den Verbindungskanal 13 beim Entfernen des Filterelementes 3 in den Leerlaufkanal 8 entleert wird.

Generell umfasst die Ventileinrichtung 10 einen Schiebekolben 15, zwei Federelemente 16 und 17 sowie einen Ventilkolben 18, wobei das erste Federelement 16 zwischen dem Ventilkolben 18 und dem Schiebekolben 15 und das zweite Federelement 17 zwischen dem Ventilkolben 18 und dem vorzugsweise aus Kunststoff ausgebildeten Einsatz 9 angeordnet ist. Das zweite Federelement 17 spannt dabei den Ventilkolben 18 in seine Öffnungsstellung vor, wogegen das erste Federelement 16 durch Betätigung des Schiebekolbens 15 den Ventilkolben 18 bei eingesetztem Filterelement 3 in seine Schließstellung drückt. Das erste Federlement 16 dient zusätzlich zusammen mit dem Schiebekolben 15 zum Ausgleich von Toleranzen die vom Filterelement 3, z. B. vom Zapfen 6 oder von der Herstellung des Filterelements 3, herrühren können. Der Schiebekolben 15 ist im Einsatz 9 beweglich verrastet in radial angeordneten Fenstern 25, bzw. Öffnungen, die auch zum Abfluss der Flüssigkeit aus dem Rohraum 4 dienen.

Wie den Fig. 1 und 2 weiter zu entnehmen ist, steht der Schiebekolben 15 bei eingebautem Filterelement 3 mit dem Zapfen 6 des Filterelements 3 in Kontakt und zwar im Bereich eines Ventils 19. Das Ventil 19 wird dabei durch einen schiebekolbenseitigen Ventilsitz gebildet, in welchen der Zapfen 6 mit einer Stirnseite dicht eingreift. Bei entferntem Filterelement 3 kann somit über das geöffnete Ventil 19, das heißt durch den hohlen Schiebekolben 15 hindurch, Filterflüssigkeit aus dem Rohraum 4 über die Ventileinrichtung 10 in den Leerlaufkanal 8 abfließen.

Durch die im erfindungsgemäßen Funktionselement 20 vorgesehenen Fenster 25 wird im Falle des Filterelementwechsels der Spiegel des Rohöles im Rohraum 4 nach unten verlegt, dadurch kann mehr Rohöl über den Leerlaufkanal 8 das Filtergehäuse 2 verlassen, als es bei den bisher üblichen Filtern üblich war. Um auch im unteren Bereich des Filtergehäuses 2 den Rohraum 4 zu entleeren, sind im Einsatz 9 unterhalb der Dichtung 12"' Fenster 25 vorgesehen (nicht gezeigt). Diese Fenster 25 dienen gleichzeitig als Gegenrastmittel für die als Rasthaken ausgebildeten Sicherungselemente 23 des Schiebekolbens 15.

Diese Fenster 25 sind auch bei einer alternativen Ausführungsform vorgesehen, bei der der Schiebekolben 15 am Zapfen 6 befestigt, z. B. verrastet ist. Die Dichtungsanordnung der Dichtungen 12, 12' und 12'" ist bei der alternativen Ausführungsform gleich.

Gemäß den Fig. 1 und 2 ist dabei das Filterelement 3 in seinem eingebauten Zustand gezeigt, in welchem es mit seinem Zapfen 6 in Kontakt mit dem Schiebekolben 15 steht und diesen nach unten drückt. Über den nach unten gedrückten Schiebekolben 15 wird das erste Federelement 16 vorgespannt und der damit verbundene Ventilkolben 18 nach unten, d. h. in seine Schließstellung gegen einen Ventilsitz gedrückt. Bei entferntem Filterelement 3 befindet sich der Schiebekolben 15 in seiner oberen Ausgangsstellung, wodurch das erste Federelement 16 entspannt ist. In diesem Zustand drückt das zweite Federelement 17 den Ventilkolben 18 nach oben und hebt diesen von einem einsatzseitigen Ventilsitz ab. Erst durch den Einbau des Filterelements 3 wird über dessen Zapfen 6 der Schiebekolben 15 nach unten gedrückt und dadurch das erste Federelement 16 gespannt, woraufhin diese eine größere Federkraft auf den Ventilkolben 18 ausübt als das zweite Federelement 17 und somit den Ventilkolben 18 gegen den einsatzseitigen Ventilsitz 27 presst. Dieser Ventilsitz 27 bildet die Leerlaufdichtstelle des Rohraumes 4 gegenüber des Leerlaufkanals 8 nach außen. Insgesamt weist die Ventileinrichtung 10 samt Zapfen 6 und Funktionselement 20 sechs Dichtstellen/Dichtungen 12, 12', 12", 12"', 28 sowie 27 auf. Die Dichtstelle 28 ist der Ventilsitz 27 des Ventils 19, das den Reinraum 5 vom Rohraum 4 trennt. Zum gleichen Zweck ist auch die Dichtung 12 und die Dichtung 12"' vorgesehen. Im Inneren des Schiebekolbens 15 steht auf Grund der Fenster 25 Rohöl an. Das gefilterte Öl steht über den Verbindungskanal 13 immer an der Außenseite des Schiebekolbens 15 an. Es kann aber wegen der Dichtung 28 des Ventilsitzes 27 des Ventils 19 und der Dichtung 12"'nicht in den Schiebekolben 15 hineingelangen. Das passiert erst, wenn das Filterelement 3 samt Zapfen 6 herausgenommen wird. Die Dichtungen 12'und 12"bilden die Abdichtung des Funktionselements 20 im Filtergehäuse 2. Die Dichtung des Ventilsitzes 27 des eigentlichen Leerlaufventils und seines Ventilkolbens 18 dichtet das ganze gegen den Leerlaufkanal 8 ab, bzw. die Umgebung. Die Fig. 2 zeigt die Dichtfunktion aller für die Leerlauffunktion wichtiger Dichtungen im Fall des eingesetzten Filterelementes 3 bzw. im Betrieb des Kraftfahrzeuges.

Die Fenster 25 sind möglichst lang damit der Rohölspiegel möglichst tief liegt. Wichtig ist insbesondere die Dichtfunktion der Dichtung 12"', die verhindert dass gefiltertes Öl in den Rohraum 4 zurückfließt. Die verschiedenen Dichtungen können sowohl als O-Ring als auch als angespritzte Dichtungen vorliegen. Die Art der verwendeten Dichtungen kann beliebig gewählt werden.

Betrachtet man die Fig. 2 weiter, so kann man erkennen, dass die Zapfenaufnahme 7 des Einsatzes 9 flüssigkeitsdicht über eine Dichtung 12' in den Leerlaufkanal 8 eingesetzt ist, wobei der Einsatz 9 generell Bestandteil eines Funktionselements 20 sein kann, welches über einen entsprechenden Stutzen 21 mit einer weiteren Dichtung 12" in einen reinraumseitigen Abfluss 22 flüssigkeitsdicht eingesetzt ist. Das Funktionselement 20 kann dabei zusammen mit dem Einsatz 9 aus Kunststoff, insbesondere als Kunststoffspritzgussteil ausgebildet sein. Das Funktionselement 20 weist eine zum Zapfen 6 passende Rampengeometrie auf. Je nach Form des untersten Abschnittes des Zapfens 6 muss die Rampe so ausgebildet sein, dass die Stirnseite des Zapfens 6 die in einen schiebkolbenseitigen Ventilsitz des Ventils 19 eingreift, nicht verletzt wird, da sonst die Dichtfunktion nicht gewährleistet werden kann. Bei der alternativen Ausführungsform muss die Rampe so gestaltet sein, dass der am Zapfen 6 befestigte Schiebekolben 15 nicht gelockert oder losgelöst wird. Eventuell muss eine gleitfähige Beschichtung auf die Rampe aufgetragen werden. Auch sollte bei der Wahl der Kunststoffe für das Funktionselement 20, als auch für den Zapfen 6, bzw. den Schiebekolben 15 auf die Gleiteigenschaften geachtet werden. Die Geometrie des Zapfens 6 selber muss den jeweiligen Gegebenheiten angepasst werden. Bei der Verwendung der erfindungsgemäßen Filtereinrichtung 1 für Nutzfahrzeuge, muss man beachten, dass die Stabilität des Zapfens 6 mit zunehmender Filterelementgröße mitwachsen muss. Auch die Dicke der Endscheibe 11 an der der Zapfen 6 mitangeformt ist oder an der er befestigt ist, muss dem Gewicht des Filterelementes 3 angepasst werden, um zu vermeiden, dass beim Einbau eines neuen Filterelementes 3 der Zapfen 6 gelockert oder abgebrochen wird.

Desweiteren ist auch am Schiebekolben 15 in einer entsprechenden umlaufenden Nut eine Dichtung 12"' angeordnet, so dass der Schiebekolben 15 flüssigkeitsdicht in der Zapfenaufnahme 7 bzw. in einem sich daran anschließenden Abschnitt des Leerlaufkanals 8 im Einsatz 9 geführt ist. Selbstverständlich kann dabei rein theoretisch der Schiebekolben 15 auch am Zapfen 6 des Filterelements 3 angeordnet sein. In diesem Fall wären keine Sicherungselemente 23, wie beispielsweise Rasthaken, erforderlich, die durch Hintergreifen einer einsatzseitigen Rastkontur einen Verstellweg des Schiebekolbens 15 begrenzen.

Generell ist die erfindungsgemäße Filtereinrichtung 1 zum Filtern von Schmieröl oder zum Filtern von Kraftstoff ausgebildet. Der erfindungsgemäßen Filtereinrichtung 1 wird somit der Zapfen 6 des Filterelements 3 zur Betätigung der Ventileinrichtung 10 benutzt, besitzt jedoch darüber hinaus über seine Dichtung 12 zusätzlich eine Dichtfunktion. Durch die beiden Federelemente 16 und 17 können darüber hinaus insbesondere die bei der Fertigung des gesamten Filterelementes 3 auftretenden Fertigungstoleranzen leicht kompensiert werden. Die erfindungsgemäße Filtereinrichtung 1 kommt insbesondere im Nutzfahrzeugbau zum Einsatz, in welchem Filtereinrichtungen 1 mit großem Innenvolumen üblich sind. Da bei derartigen Filtereinrichtungen 1 nicht nur rohseitig, sondern zugleich auch reinseitig viel Filterflüssigkeit ansteht, kann mit dem erfindungsgemäßen Einsatz 9 bzw. dem erfindungsgemäßen Funktionselement 20 eine kostengünstige und konstruktiv einfache Einrichtung geschaffen werden, die es gewährleistet, beim Austausch des Filterelements 3 den Rohraum 4 vollständig und den Reinraum 5 teilweise leer laufen zu lassen. Ohne die Dichtfunktion des Zapfens 6 und dem im Einsatz 9 bzw. im Funktionselement 20 vorgesehenen Verbindungskanal 13 zwischen dem Reinraum 5 und dem Leerlaufkanal 8, wäre ein teilweises Leerlaufen lassen des Reinraums 5 beim Ausbau des Filterelements 3 nicht möglich. Um ein Abfließen von Filterflüssigkeit aus dem Rohraum 4 zusätzlich zu erleichtern, sind im Bereich des Schiebekolbens 15 unterhalb der Dichtung 12"' Radialöffnungen /Fenster 25 vorgesehen, durch welche aus dem Rohraum 4 zur Ventileinrichtung 10 strömende Filterflüssigkeit in ein Inneres der Ventileinrichtung 10 hineinströmen kann. Durch das Entfernen des Filterelementes 3 wird der Schiebekolben 15 nach oben geschoben. Die Dichtung 12"' behält ihre Dichtfunktion. Durch das Entfernen des Filterelementes 3 wird aufgrund der nun von dem zweiten Federelement 17 auf den Ventilkolben 18 ausgeübten Federkraft auch dieser von seinem Ventilsitz abgehoben, so dass Filterflüssigkeit sowohl vom Reinraum 5 als auch vom Rohraum 4 abfließen kann.

In einer weiteren alternativen Ausführungsform, nicht gezeigt, kann der Zapfen 6 einen elektrischen Schaltkreis betätigen, der dann ein im Funktionselement 20 befindliches elektrisch gesteuertes Ventil betätigt.

Fig. 3a ,b zeigen eine Filtereinrichtung 1, die ein Funktionselement 20 aufweist, das im Bereich der Zapfenaufnahme 7 oberhalb der Dichtung 12 bei eingeschobenem Zapfen 6 weitere Fenster 25a aufweist, die ein zügiges und zuverlässiges Entleeren der Zapfenaufnahme 7 ermöglichen, bevor der Zapfen 6 herausgezogen wird. Hierdurch kann ebenfalls eine unerwünschte Vermischung von gefiltertem und ungefiltertem Kraftstoff verhindert werden.

## Patentansprüche

1. Filtereinrichtung (1) zum Filtern einer Flüssigkeit einer Brennkraftmaschine, insbesondere in einem Kraftfahrzeug,
- mit einem Filtergehäuse (2) zur Aufnahme eines Filterelements (3),
- wobei das Filterelement (3) im eingesetzten Zustand einen Rohraum (4) von einem Reinraum (5) trennt,
- wobei das Filterelement (3) einen axial und exzentrisch abstehenden Zapfen (6) aufweist, der im eingesetzten Zustand in eine Zapfenaufnahme (7) in einem Leerlaufkanal (8) eingesteckt ist,
**dadurch gekennzeichnet,**
- **dass** im Bereich der Zapfenaufnahme (7) eine Ventileinrichtung (10) vorgesehen ist, die bei vorhandenem Filterelement (3) durch den Zapfen (6) in einen Schließzustand gedrückt ist und den Leerlaufkanal (8) verschließt,
- **dass** der Zapfen (6) eine Dichtung (12) aufweist und somit dicht in den Leerlaufkanal (8) einsteckbar ist,
- zwischen dem Reinraum (5) und dem Leerlaufkanal (8) ein Verbindungskanal (13) vorgesehen ist, der in Leerlaufrichtung (14) nach der Dichtung (12) des Zapfens (6) in den Leerlaufkanal (8) mündet, so dass bei entferntem Filterelement (3) sowohl der Rohraum (4) als auch der Reinraum (5) über die geöffnete Ventileinrichtung (10) entleert werden können.

2. Filtereinrichtung nach Anspruch 1,
**dadurch gekennzeichnet,**
**dass** die Zapfenaufnahme (7), die Ventileinrichtung (10) und der Verbindungskanal (13) Bestandteil eines insbesondere aus Kunststoff ausgebildeten Einsatzes (9) sind.

3. Filtereinrichtung nach Anspruch 1 oder 2,
**dadurch gekennzeichnet,**
**dass** die Ventileinrichtung (10) einen Schiebekolben (15), Federelemente (16,17) und einen Ventilkolben (18) aufweist.

4. Filtereinrichtung nach Anspruch 3,
**dadurch gekennzeichnet,**
**dass** zwei Federelemente (16,17) vorgesehen sind, wovon das erste Federelement (16) zwischen dem Ventilkolben (18) und dem Schiebekolben (15) und das zweite Federelement (17) zwischen dem Ventilkolben (18) und dem Einsatz (9) angeordnet ist.

5. Filtereinrichtung nach Anspruch 4,
**dadurch gekennzeichnet,**
**dass** das zweite Federelement (17) den Ventilkolben (18) in seine Öffnungsstellung vorspannt, wogegen das erste Federelement (16) den Ventilkolben (18) bei eingesetztem Filterelement (3) in seine Schließstellung drückt.

6. Filtereinrichtung nach einem der Ansprüche 3 bis 5,
**dadurch gekennzeichnet,**
**dass** der Schiebekolben (15) bei eingebautem Filterelement (3) mit dem Zapfen (6) des Filterelements (3) in Kontakt steht.

7. Filtereinrichtung nach einem der Ansprüche 2 bis 6,
**dadurch gekennzeichnet,**
**dass** der Einsatz (9) über eine O-Ringdichtung (12') flüssigkeitsdicht in den Leerlaufkanal (8) einsetzbar ist, wobei der Einsatz (9) zugleich Bestandteil eines Funktionselementes (20) ist.

8. Filtereinrichtung nach einem der Ansprüche 3 bis 7,
**dadurch gekennzeichnet,**
**dass** der Schiebekolben (15) am Zapfen (6) des Filterelementes (3) angeordnet ist.

9. Filtereinrichtung nach einem der Ansprüche 1 bis 8,
**dadurch gekennzeichnet,**
**dass** die Filtereinrichtung (1) zum Filtern von Schmieröl oder zum Filtern von Kraftstoff ausgestaltet ist.

10. Filtereinrichtung nach einem der Ansprüche 3 bis 9,
**dadurch gekennzeichnet,**
**dass** der Schiebekolben (15) eine außen liegende Dichtung (12"') aufweist, über welche er gegenüber der Zapfenaufnahme (7) abgedichtet ist.

11. Filtereinrichtung nach einem der Ansprüche 3 bis 10,
**dadurch gekennzeichnet,**
**dass** der Schiebekolben (15) einen dem Zapfen (6) zugewandten axialen Ventilsitz aufweist, an/in welchen der Zapfen (6) des Filterelements (3) mit seiner Stirnseite dicht eingreift.

12. Filtereinrichtung nach einem der Ansprüche 3 bis 11,
**dadurch gekennzeichnet,**
**dass** der Schiebekolben (15) hohl ausgebildet ist.

## Claims

1. A filter device (1) for filtering a liquid of an internal combustion engine, in particular in a motor vehicle,
- with a filter housing (2) for receiving a filter element (3),
- wherein the filter element (3) separates in its inserted state a crude chamber (4) from a pure chamber (5),
- wherein the filter element (3) has an axially and eccentrically projecting plug (6) which, in the inserted state, is plugged into a plug receptacle (7) in a drain channel (8),
**characterized in**
- **that** in the region of the plug receptacle (7), a valve device (10) is provided which, when the filter element (3) is present, is pushed by the plug (6) into a closed state and closes the drain channel (8),
- **that** the plug (6) has a seal (12) and thus can be plugged in a leak-proof manner into the drain channel (8),
- **that** between the pure chamber (5) and the drain channel (8), a connecting channel (13) is provided which opens out in drain direction (14) downstream of the seal (12) of the plug (6) into the drain channel (8) in such a manner that when the filter element (3) is removed, the crude chamber (4) as well as the pure chamber (5) can be drained through the open valve device (10).

2. The filter device according to claim 1,
**characterized in**
**that** the plug receptacle (7), the valve device (10), and the connecting channel (13) are part of an insert (9) which is in particular formed from plastic.

3. The filter device according to claim 1 or claim 2,
**characterized in**
**that** the valve device (10) has a sliding piston (15), spring elements (16, 17) and a valve piston (18).

4. The filter device according to claim 3,
**characterized in**
**that** two spring elements (16, 17) are provided, the first spring element (16) of which is arranged between the valve piston (18) and the sliding piston (15), and the second spring element (17) is arranged between the valve piston (18) and the insert (9).

5. The filter device according to claim 4,
**characterized in**
**that** the second spring element (17) pretensions the valve piston (18) into its open position, whereas the first spring element (16) pushes the valve piston (18) in its closed position when the filter element (3) is inserted.

6. The filter device according to any one of the claims 3 to 5,
**characterized in**
**that** the sliding piston (15) is in contact with the plug (6) of the filter element (3) when the filter element (3) is assembled.

7. The filter device according to any one of the claims 2 to 6,
**characterized in that** the insert (9) can be inserted in a liquid-tight manner into the drain channel (8) via an 0-ring seal (12'), wherein the insert (9) is at the same time part of a functional element (20).

8. The filter device according to any one of the claims 3 to 7,
**characterized in that** the sliding piston (15) is arranged on the plug (6) of the filter element (3).

9. The filter device according to any one of the claims 1 to 8,
**characterized in**
**that** the filter device (1) is configured for filtering lubrication oil or for filtering fuel.

10. The filter device according to any one of the claims 3 to 9,
**characterized in that**
the sliding piston (15) has an external seal (12" ') by means of which the sliding piston is sealed against the plug receptacle (7).

11. The filter device according to any one of the claims 3 to 10,
**characterized in**
**that** the sliding piston (15) has an axial valve seat facing the plug (6), at/in which valve seat the plug (6) of the filter element (3) engages with its front side in a tight manner.

12. The filter device according to any one of the claims 3 to 11,
**characterized in**
**that** the sliding piston (15) is formed to be hollow.

## Revendications

1. Dispositif de filtre (1) pour filtrer un liquide d'un moteur à combustion interne, notamment dans un véhicule automobile,
- comportant un logement de filtre (2) pour recevoir un élément de filtre (3),
- dans lequel l'élément de filtre (3) sépare en l'état inséré un espace brut (4) d'un espace purifié (5),
- dans lequel l'élément de filtre (3) présente un goujon de fixation (6) dépassant axialement et excentriquement, qui en l'état inséré est enfiché dans un réceptacle de goujon (7) dans un canal de ralenti (8),
**caractérisé en ce que**
- au niveau du réceptacle de goujon (7) un dispositif de soupape (10) est prévu, qui en présence de l'élément de filtre (3) est pressé par le goujon de fixation (6) dans un état de fermeture et obture le canal de ralenti (8),
- le goujon de fixation (6) présente un joint d'étanchéité (12) et peut ainsi être enfiché de manière étanche dans le canal de ralenti (8),
- entre l'espace purifié (5) et le canal de ralenti (8) un canal de liaison (13) est prévu, qui dans la direction de ralenti (14) débouche après le joint d'étanchéité (12) du goujon de fixation (6) dans le canal de ralenti (8), de sorte que quand l'élément de filtre (3) est retiré, tant l'espace brut (4) que l'espace purifié (5) peuvent être vidangés par l'intermédiaire du dispositif de soupape ouvert (10).

2. Dispositif de filtre selon la revendication 1,
**caractérisé en ce que**
le réceptacle de goujon (7), le dispositif de soupape (10) et le canal de liaison (13) sont partie intégrante d'un insert (9) réalisé notamment en plastique.

3. Dispositif de filtre selon les revendications 1 ou 2,
**caractérisé en ce que**
le dispositif de soupape (10) présente un piston coulissant (15), des éléments de ressort (16, 17) et un piston de soupape (18).

4. Dispositif de filtre selon la revendication 3,
**caractérisé en ce que**
deux éléments de ressort (16, 17) sont prévus, desquels le premier élément de ressort (16) est disposé entre le piston de soupape (18) et le piston coulissant (15) et le deuxième élément de ressort (17) est disposé entre le piston de soupape (18) et l' insert (9).

5. Dispositif de filtre selon la revendication 4,
**caractérisé en ce que**
le deuxième élément de ressort (17) précontraint le piston de soupape (18) dans une position d'ouverture, tandis que le premier élément de ressort (16) presse le piston de soupape (18) dans sa position de fermeture quand l'élément de filtre (3) est inséré.

6. Dispositif de filtre selon une des revendications 3 à 5,
**caractérisé en ce que**
le piston coulissant (15) est en contact avec le goujon de fixation (6) de l'élément de filtre (3) quand l'élément de filtre (3) est monté.

7. Dispositif selon une des revendications 2 à 6,
**caractérisé en ce que**
l'insert (9) peut être inséré par l'intermédiaire d'un joint d'étanchéité torique (12') de manière étanche aux liquides dans le canal de ralenti (8), dans lequel l'insert (9) est simultanément partie intégrante d'un élément fonctionnel (20).

8. Dispositif de filtre selon une des revendications 3 à 7,
**caractérisé en ce que**
le piston coulissant (15) est disposé sur le goujon de fixation (6) de l'élément de filtre (3) .

9. Dispositif de filtre selon une des revendications 1 à 8,
**caractérisé en ce que**
le dispositif de filtre (1) est conçu afin de filtrer de l'huile lubrifiante ou filtrer du carburant.

10. Dispositif de filtre selon une des revendications 3 à 9,
**caractérisé en ce que**
le piston coulissant (15) présente un joint d'étanchéité (12"') situé à l'extérieur, par l'intermédiaire duquel il est rendu étanche par rapport au réceptacle de goujon (7).

11. Dispositif de filtre selon une des revendications 3 à 10,
**caractérisé en ce que**
le piston coulissant (15) présente un siège de soupape axial tourné vers le goujon de fixation (6), sur/dans lequel le goujon de fixation (6) de l'élément de filtre (3) vient en prise de manière étanche par un côté frontal.

12. Dispositif de filtre selon une des revendications 3 à 11,
**caractérisé en ce que**
le piston coulissant (15) a une configuration creuse.
